# EUROPÄISCHE PATENTANMELDUNG

(11) **EP 3 679 774 A1**
(43) Veröffentlichungstag der Anmeldung: **15.07.2020**
(21) Anmeldenummer: 19214467.3
(22) Anmeldetag: 09.12.2019
(51) Int. Cl.: A01B 39/18, A01B 49/02

(54) **HACKPFLUG**

(30) Priorität: 09.01.2019 DE 102019200171
(71) Anmelder: Dreesbeimdieke, Hermann, 33334 Gütersloh (DE)
(72) Erfinder: Dreesbeimdieke, Hermann, 33334 Gütersloh (DE)
(74) Vertreter: Hoefer & Partner Patentanwälte mbB

(57) **Zusammenfassung**

Die Erfindung betrifft einen Hackpflug (1) zur Unkrautvernichtung in Gassen zwischen Reihen aus Kulturpflanzen, umfassend einen an einer Zugmaschine befestigbaren Rahmen (2) zum Ziehen entlang einer Fahrtrichtung (20), und zumindest eine am Rahmen (2) angeordnete Bearbeitungseinheit (3) zur Bearbeitung einer einzelnen Gasse mit einer parallel zur Fahrtrichtung (20) definierten Gassenmittellinie (21), wobei die Bearbeitungseinheit (3) umfasst: zumindest eine Schar (6) im Bereich der Gassenmittellinie (21), zumindest eine Vorder-Schneidscheibe (9) vor der Schar (6) und seitlich versetzt zur Gassenmittellinie (21), und zumindest eine Nach-Schneidscheibe (10) nach der Schar (6) und seitlich versetzt zur Gassenmittellinie (21).

## Beschreibung

Die Erfindung betrifft einen Hackpflug zur Unkrautvernichtung in Gassen zwischen Reihen aus Kulturpflanzen.

Aus dem Stand der Technik sind unterschiedliche Hackpflüge bekannt. Diese weisen beispielsweise eine Gänsefuß-Schar auf, die in einer Gasse zwischen Reihen aus Kulturpflanzen zur Bodenbearbeitung genutzt werden kann. Dabei wird im Bereich der Schneiden der Schar der Boden durch die Vorfahrt nach oben bewegt. Im Grenzbereich an den seitlichen Enden der Schneiden ist dieser Vorgang jedoch nicht definiert; je nach Scherfestigkeit des Bodens können Abrisslinien zwischen dem nach oben bewegten Boden und dem auf dem Feld verbleibenden Boden sich seitlich verschieben. Dies führt zu einem ungleichmäßigen Bodenfluss. Insbesondere können so die Kulturpflanzen seitlich der Gasse beschädigt werden.

Es ist eine Aufgabe der vorliegenden Erfindung, einen Hackpflug anzugeben, das bei einfachem Aufbau und einfacher Benutzung eine Bearbeitung des Bodens unter Schonung von Kulturpflanzen ermöglicht.

Die Lösung der Aufgabe erfolgt durch die Merkmale des unabhängigen Anspruchs. Die abhängigen Ansprüche haben vorteilhafte Ausgestaltungen der Erfindung zum Gegenstand.

Somit wird die Aufgabe gelöst durch einen Hackpflug. Insbesondere ist der Hackpflug zur Unkrautvernichtung in Gassen zwischen Reihen aus Kulturpflanzen ausgebildet. Beim Einsatz des Hackpflugs müssen diese Kulturpflanzen noch nicht sichtbar sein. Beispielsweise können auch im Boden eingesetzte Reihen aus Samen als "Kulturpflanzen" angesehen werden, wobei zwischen diesen Samenreihen die Bodenbearbeitung mit dem hier beschriebenen Hackpflug erfolgen soll.

Der Hackpflug umfasst einen an der Zugmaschine befestigbaren Rahmen, um dadurch den Hackpflug entlang einer Fahrtrichtung zu ziehen. An dem Rahmen ist zumindest eine Bearbeitungseinheit angeordnet. Die einzelne Bearbeitungseinheit dient zum Bearbeiten des Bodens in einer einzelnen Gasse. Insbesondere sind an dem Rahmen mehrere parallele Bearbeitungseinheiten angeordnet, um gleichzeitig in mehreren Gassen den Boden zu bearbeiten. Der Rahmen kann einen Grundrahmen und zumindest einen Werkzeugrahmen umfassen. Der Grundrahmen erstreckt sich insbesondere quer zur Fahrtrichtung und wird mit der Zugmaschine verbunden. An dem Grundrahmen wiederum ist pro Bearbeitungseinheit ein Werkzeugrahmen angeordnet. Der Werkzeugrahmen erstreckt sich insbesondere parallel zur Fahrtrichtung.

Im Folgenden wird der Aufbau einer einzelnen Bearbeitungseinheit beschrieben. Bei Verwendung mehrerer Bearbeitungseinheiten sind diese vorzugsweise jeweils baugleich. Zur Definition von Positionen und Ausrichtungen einzelner Komponenten der Bearbeitungseinheit ist eine Gassenmittellinie definiert. Diese Gassenmittellinie erstreckt sich insbesondere in der Mitte der zwischen den Kulturreihen definierten Gasse.

Die einzelne Bearbeitungseinheit umfasst zumindest eine Schar. Diese Schar befindet sich im Bereich der Gassenmittellinie. Somit definiert auch die Position der Schar diese Gassenmittellinie. Es können auch pro Bearbeitungseinheit mehrere Schare verwendet werden. Die Gassenmittellinie verläuft dann insbesondere in der Mitte dieser mehreren Scharen.

Des Weiteren umfasst die einzelne Bearbeitungseinheit zumindest eine Vorder-Schneidscheibe, die bezüglich der Fahrtrichtung vor der Schar und seitlich versetzt zur Gassenmittellinie angeordnet ist. Mittels dieser Vorder-Schneidscheibe wird der Boden versetzt zur Gassenmittellinie getrennt, um einen kontinuierlichen Bodenfluss zu gewährleisten. Anschließend an die Vorder-Schneidscheibe hebt die Schar den Boden an, wobei es durch das Trennen mittels der Vorder-Schneidscheibe beim Anheben des Bodens zu einer definierten Abrisslinie kommt.

Des Weiteren umfasst die einzelne Bearbeitungseinheit eine Nach-Schneidscheibe, die bezüglich der Fahrtrichtung hinter der Schar und seitlich versetzt zur Gassenmittellinie angeordnet ist. Die Nach-Schneidscheibe stellt sicher, dass der von der Schar nach oben und seitlich bewegte Boden nicht bis zu den Kulturpflanzen geworfen wird. Insbesondere führt die Nach-Schneidscheibe zu einer Rückführung des Bodens in Richtung der Gassenmittellinie.

In der einfachsten Ausführung umfasst die Schar nur eine Schneidfläche, die den Bode auf nur eine Seite, beispielsweise nach links, versetzt. Bei dieser einfachen Ausgestaltung ist eine einzelne Vorder-Schneidscheibe, beispielsweise auf der linken Seite der Gassenmittellinie, und eine einzelne Nach-Schneidscheibe, beispielsweise auf der linken Seite der Gassenmittellinie, nötig. In bevorzugter Ausführung umfasst die Schar jedoch zwei Schneidflächen um den Boden gleichzeitig nach links und nach rechts zu versetzen. Dabei ist die Schar insbesondere als Gänsefuß-Schar ausgebildet. Dementsprechend wird dann vorzugsweise auf beiden Seiten der Gassenmittellinie eine Vorder-Schneidscheibe und eine Nach-Schneidscheibe verwendet.

Des Weiteren ist bevorzugt vorgesehen, dass, entlang der Fahrtrichtung betrachtet, unmittelbar auf die Vorder-Schneidscheibe die Schar folgt. Des Weiteren ist bevorzugt vorgesehen, dass unmittelbar auf die Schar die Nach-Schneidscheibe folgt. Diese "unmittelbare" Aneinanderreihung der Schneidscheiben und der Schar beschreibt, dass zwischen Vorder-Schneidscheibe und Schar bzw. zwischen Schar und Nach-Schneidscheibe keine anderweitigen, den Boden berührenden Elemente vorgesehen sind.

Die einzelne Schneidscheibe (Vorder-Schneidscheibe oder Nach-Schneidscheibe) ist vorzugsweise mittels jeweils einer eigenen Aufhängung mit dem Rahmen (insbesondere Werkzeugrahmen) verbunden. Im Folgenden wird diese Aufhängung einer einzelnen Schneidscheibe im Detail erläutert. Solch eine Aufhängung kann sowohl für die einzelne Vorder-Schneidscheibe als auch für die einzelne Nach-Schneidscheibe verwendet werden:
In bevorzugter Ausführung befindet sich die Schneidscheibe drehbar an einer Scheibenaufnahme. Beim Ziehen des Hackpflugs über den Boden schneidet die Schneidscheibe in den Boden und dreht dabei relativ zu dieser Scheibenaufnahme. Vorzugsweise ist vorgesehen, dass die Scheibenaufnahme mittels einer Scheiben-Winkelverstellung relativ zum Rahmen schwenkbar ist. Dieses Verschwenken der Scheibenaufnahme relativ zum Rahmen erfolgt um eine senkrechte Achse. Diese Achse steht insbesondere senkrecht zur Fahrtrichtung und senkrecht zur Querachse. Die senkrechte Achse kann auch als vertikale Achse bezeichnet werden. Die senkrechte Achse kann insbesondere um ± 15° von der Senkrechten bzw. Vertikalen abweichen.

Mittels der Scheiben-Winkelverstellung ist die Scheibenaufnahme in unterschiedlichen Drehwinkelpositionen fixierbar und somit gegen die Fahrtrichtung anstellbar.

Die Scheiben-Winkelverstellung umfasst vorzugsweise ein bogenförmiges Langloch. Dieses Langloch ermöglicht die Einstellung in unterschiedlichen Drehwinkelpositionen. Alternativ zum Langloch können hier beispielsweise auch bogenförmig aneinander gereihte Lochreihen verwendet werden.

Vorzugsweise umfasst die Scheiben-Winkelverstellung zumindest zwei Anschläge. Bei Ausgestaltung als bogenförmiges Langloch bilden die zwei Enden des Langlochs die Anschläge. Bei der bogenförmigen Lochreihe bilden zwei der Löcher diese zumindest zwei Anschläge. Durch die Anschläge ist eine maximale Drehwinkelverstellbarkeit der Scheibenaufnahme um die senkrechte Achse begrenzt. Insbesondere ist vorgesehen, dass die Scheibenaufnahme um nicht mehr als 120°, insbesondere nicht mehr als 100°, verstellbar ist. Dadurch wird gewährleistet, dass bei einer etwaigen Fehlbedienung die Schneidscheibe nicht quer gestellt wird.

Die Scheiben-Winkelverstellung und somit das Anstellen der Schneidscheibe gegenüber der Fahrtrichtung hat zum Vorteil, dass dadurch eine Bodenbewegung zur Gassenmittellinie hin begünstigt werden kann.

Ferner ist insbesondere vorgesehen, dass die Schneidscheibe als Hohlscheibe ausgebildet ist. Solch eine Hohlscheibe weist eine konkave und eine konvexe Seite auf. Die Schneidscheibe ist vorzugsweise so angeordnet, dass ihre konkave Seite zur Gassenmittellinie hingewandt ist. Durch diese Anordnung der Hohlscheiben kann der Bodenfluss zur Gassenmittellinie hin begünstigt werden.

Des Weiteren ist bevorzugt vorgesehen, dass die Aufhängung der Schneidscheibe eine Linearverstellbarkeit der Schneidscheibe ermöglicht. Diese Linearverstellbarkeit ist in einer horizontalen Richtung senkrecht zur Gassenmittellinie bzw. senkrecht zur Fahrtrichtung möglich. Hierzu ist eine Scheiben-Linearverstellung vorgesehen. Die Richtung der Linearverstellung kann insbesondere um ± 15° von der Horizontalen bzw. der Senkrechten zur Gassenmittellinie abweichen.

Durch die Scheiben-Linearverstellung kann der Abstand zwischen der Gassenmittellinie und der einzelnen Schneidscheibe eingestellt werden.

Insbesondere umfasst die Aufhängung der Schneidscheibe einen Scheibenträger. Die oben beschriebene Scheibenaufnahme ist an dem Scheibenträger angeordnet. Dementsprechend ist gemäß der bevorzugten Ausgestaltung die Scheibenaufnahme relativ zum Scheibenträger um die senkrechte Achse drehbar. Die Scheiben-Winkelverstellung befindet sich zwischen Scheibenträger und Scheibenaufnahme.

Der Scheibenträger dient zur Ausgestaltung der Scheiben-Linearverstellung. Hierzu ist insbesondere vorgesehen, dass der Scheibenträger linear beweglich am Rahmen (insbesondere Werkzeugrahmen) geführt ist. Der Scheibenträger steckt hierzu insbesondere in einer Aussparung des Rahmens. Dadurch ist der Scheibenträger im Wesentlichen horizontal und senkrecht zur Gassenmittellinie relativ zum Rahmen linear verstellbar.

Der Scheibenträger ist an unterschiedlichen Positionen hinsichtlich seiner Linearverschiebbarkeit fixierbar. Diese Fixierung an unterschiedlichen Positionen und das Linearverstellen kann insbesondere mittels zwei unterschiedlichen Ausgestaltungen der Scheiben-Linearverstellung erfolgen: Gemäß einer ersten Ausgestaltung umfasst die Scheiben-Linearverstellung beispielsweise eine Lochreihe oder ein Langloch zur Fixierung der Position des Scheibenträgers relativ zum Rahmen. Das Bewegen des Scheibenträgers, also insbesondere das Hineinschieben und Herausziehen aus dem Rahmen, erfolgt dabei insbesondere mit Muskelkraft.

Gemäß einer zweiten Ausgestaltung umfasst die Scheiben-Linearverstellung einen Aktuator. Der Aktuator ist insbesondere ein druckmittelgetriebener Aktuator, also beispielsweise ein Hydraulik- oder Pneumatikzylinder. Dieser Aktuator ist so angeordnet, dass er die Linearverschiebung des Scheibenträgers relativ zum Rahmen ausführt. Insbesondere kann solch ein Aktuator mit einer Steuerungsvorrichtung oder Regelungsvorrichtung verbunden werden, um insbesondere von der Zugmaschine aus die Verstellung vorzunehmen.

Die einzelne Bearbeitungseinheit umfasst in bevorzugter Ausführung eine Walze. Die Walze befindet sich insbesondere bezüglich der Fahrtrichtung hinter der letzten Nach-Schneidscheibe. Insbesondere ist die Walze über einen Walzrahmen mit dem Werkzeugrahmen verbunden. Der Walzrahmen ist vorzugsweise relativ zum Werkzeugrahmen drehbar. Die Drehung erfolgt dabei um die Querachse.

Des Weiteren ist bevorzugt eine Walz-Verstellung zwischen Walzrahmen und Werkzeugrahmen vorgesehen, um die Drehung um die Querachse in zumindest einer Drehrichtung an unterschiedlichen Positionen zu beschränken. Dadurch kann die Walze nicht nur zur Bodenverdichtung, sondern auch zur Tiefenführung der Schar bzw. der Schneidscheiben verwendet werden.

Die Schar ist vorzugsweise über einen Scharträger mit dem Rahmen (insbesondere Werkzeugrahmen) verbunden. In diesem Scharträger kann ein federndes Element, beispielsweise eine gebogene Blattfeder angeordnet sein. Besonders bevorzugt ist der Scharträger relativ zum Rahmen entlang der Fahrtrichtung linear verstellbar und an unterschiedlichen Positionen fixierbar.

Weitere Einzelheiten, Vorteile und Merkmale der vorliegenden Erfindung ergeben sich aus nachfolgender Beschreibung eines Ausführungsbeispiels anhand der Zeichnungen. Es zeigen:
- Fig. 1: einen erfindungsgemäßen Hackpflug gemäß einem Ausführungsbeispiel,
- Fig. 2 und 3: unterschiedliche Ansichten einer Bearbeitungseinheit des erfindungsgemäßen Hackpflugs gemäß dem Ausführungsbeispiel,
- Fig. 4: ein Detail aus Fig. 2 und 3, und
- Fig. 5: eine Variante der Bearbeitungseinheit des erfindungsgemäßen Hackpflugs gemäß dem Ausführungsbeispiel.

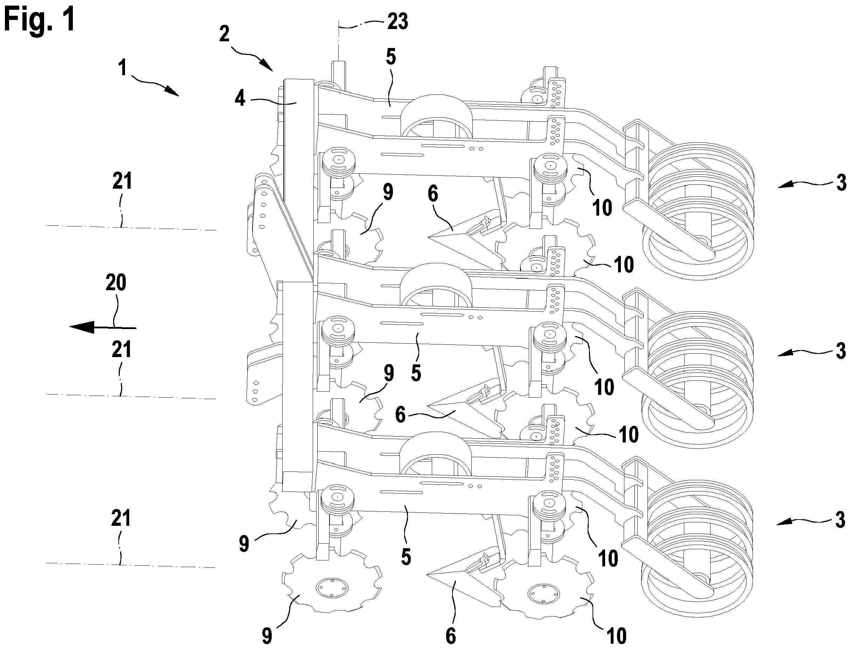

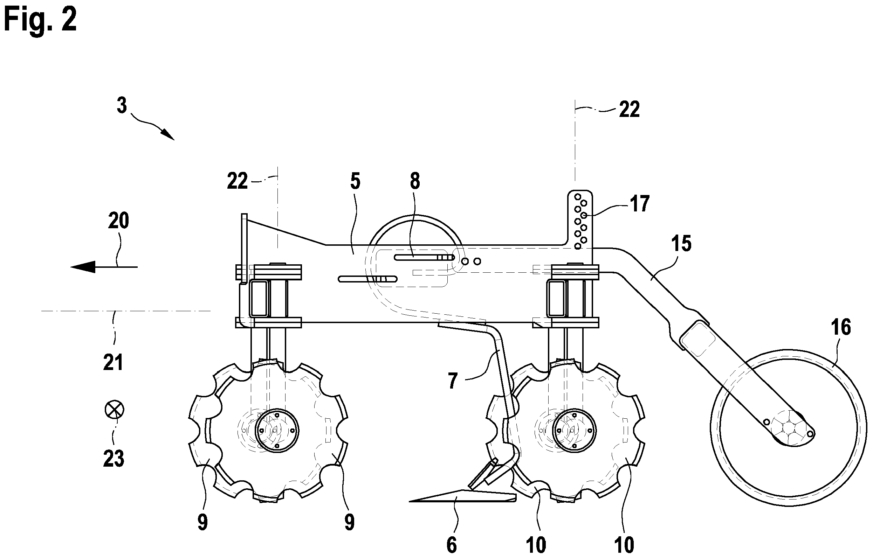

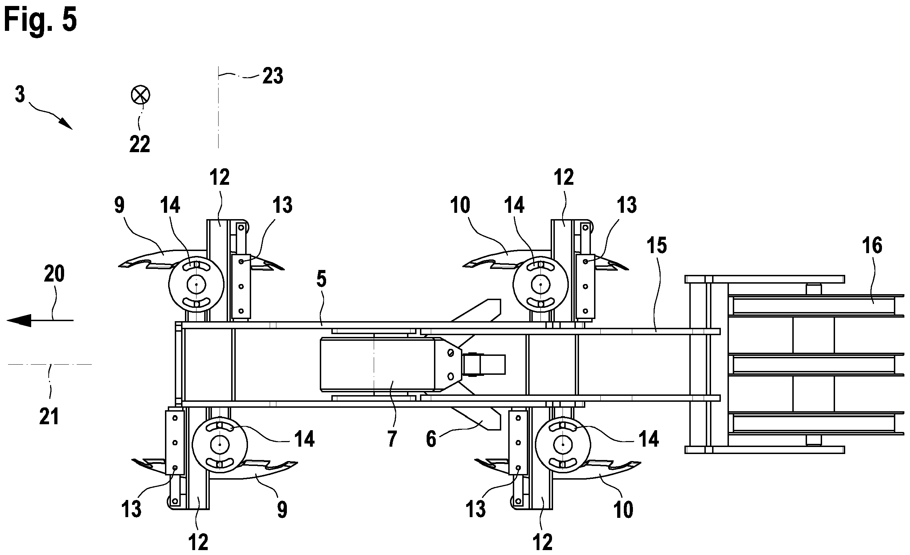

Im Folgenden wird anhand der Fig. 1 bis 4 ein Hackpflug 1 im Detail beschrieben. Anhand von Fig. 5 wird eine Variante des Hackpflugs 1 beschrieben.

Der Hackpflug 1 umfasst drei baugleiche Bearbeitungseinheiten 3. Jede Bearbeitungseinheit 3 dient zum Bearbeiten einer einzelnen Gasse. Die Gasse befindet sich dabei insbesondere zwischen Reihen aus Kulturpflanzen.

Der Hackpflug 1 umfasst einen Rahmen 2. Der Rahmen 2 wiederum umfasst einen Grundrahmen 4 und pro Bearbeitungseinheit 3 einen Werkzeugrahmen 5. Der Grundrahmen 4 kann mit einer Zugmaschine verbunden werden. Dementsprechend ist der Hackpflug 1 entlang einer Fahrtrichtung 20 bewegbar. Senkrecht zur Fahrtrichtung 20 erstreckt sich eine horizontale Querachse 23. Senkrecht zur Fahrtrichtung 20 und senkrecht zur Querachse 23 ist eine senkrechte Achse 22 definiert. Parallel zur Fahrtrichtung 20 erstreckt sich pro Bearbeitungseinheit 3 eine Gassenmittellinie 21.

Die einzelne Bearbeitungseinheit 3 umfasst neben dem Werkzeugrahmen 5 eine Schar 6. Die Schar 6 ist hier als Gänsefuß-Schar ausgebildet. Die Spitze, an der die beiden Schneidflächen der Gänsefuß-Schar zusammenlaufen, befindet sich an der Gassenmittellinie 21.

Die Schar 6 ist über einen Scharträger 7 mit dem Werkzeugrahmen 5 verbunden. Der Scharträger 7 umfasst eine gebogene Blattfeder.

Der Scharträger 7 ist parallel zur Fahrtrichtung 20 gegenüber dem Werkzeugrahmen 5 linear verschiebbar und in unterschiedlichen Positionen fixierbar. Hierzu ist eine Schar-Verstellung 8 zwischen Scharträger 7 und Werkzeugrahmen 5 vorgesehen. Im gezeigten Ausführungsbeispiel umfasst diese Schar-Verstellung 8 ein Langloch im Werkzeugrahmen 5.

Des Weiteren umfasst die einzelne Bearbeitungseinheit 3 zwei Vorder-Schneidscheiben 9 und zwei Nach-Schneidscheiben 10. Die beiden Vorder-Schneidscheiben 9 sind bezüglich der Fahrtrichtung 20 vor der Schar 6 angeordnet. Die beiden Nach-Schneidscheiben 10 sind bezüglich der Fahrtrichtung 20 nach der Schar 6 angeordnet.

Die Aufhängung der vier Schneidscheiben 9, 10 der einzelnen Bearbeitungseinheit 3 ist jeweils baugleich aufgebaut:
Pro Schneidscheibe 9, 10 sind somit eine Scheibenaufnahme 11 und ein Scheibenträger 12 vorgesehen. Die Schneidscheibe 9, 10 ist an der Scheibenaufnahme 11 drehbeweglich gelagert. Die Scheibenaufnahme 11 wiederum ist am Scheibenträger 12 befestigt. Die Verbindung zwischen Scheibenträger 12 und Scheibenaufnahme 11 ermöglicht eine Drehung der Scheibenaufnahme 11 um die senkrechte Achse 22, wodurch die Schneidscheibe 9, 10 gegen die Fahrtrichtung 20 anstellbar ist. Hierzu ist eine Scheiben-Winkelverstellung 14 zwischen Scheibenträger 12 und Scheibenaufnahme 11 vorgesehen. Im gezeigten Beispiel umfasst die Scheiben-Winkelverstellung 14 gebogene Langlöcher. Durch die Langlöcher der Scheiben-Winkelverstellung 14 sind gegenüberliegende Anschläge definiert, die eine maximale Drehwinkelverstellung begrenzen.

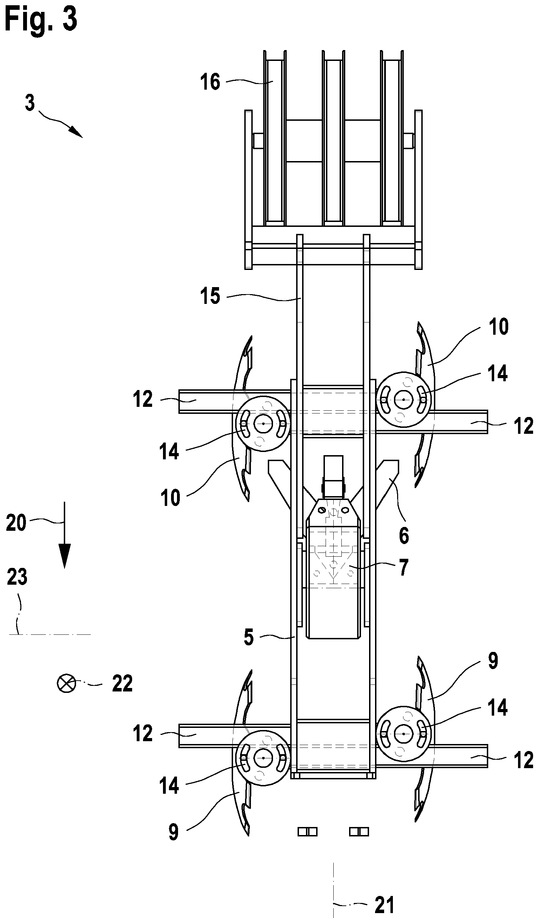

Der jeweilige Scheibenträger 12 steckt im Werkzeugrahmen 5 und ist gegenüber dem Werkzeugrahmen 5 parallel zur Querachse 23 linear verstellbar. Wie insbesondere Fig. 3 verdeutlicht, können die Scheibenträger 12 in den Werkzeugrahmen 5 eingeschoben werden. Fig. 3 zeigt hier die Position, bei der die gegenüberliegenden Schneidscheiben 9, 10 möglichst nah an der Gassenmittellinie 21 sind.

Insbesondere ist vorgesehen, dass die beiden Scheibenträger 12 der beiden gegenüberliegenden Vorder-Schneidscheiben 9 bzw. der beiden gegenüberliegenden Nach-Schneidscheiben 10 versetzt zueinander angeordnet sind und dementsprechend nicht miteinander fluchten. Dies ermöglicht relativ lange Scheibenträger 12 und somit einen großen Verstellbereich.

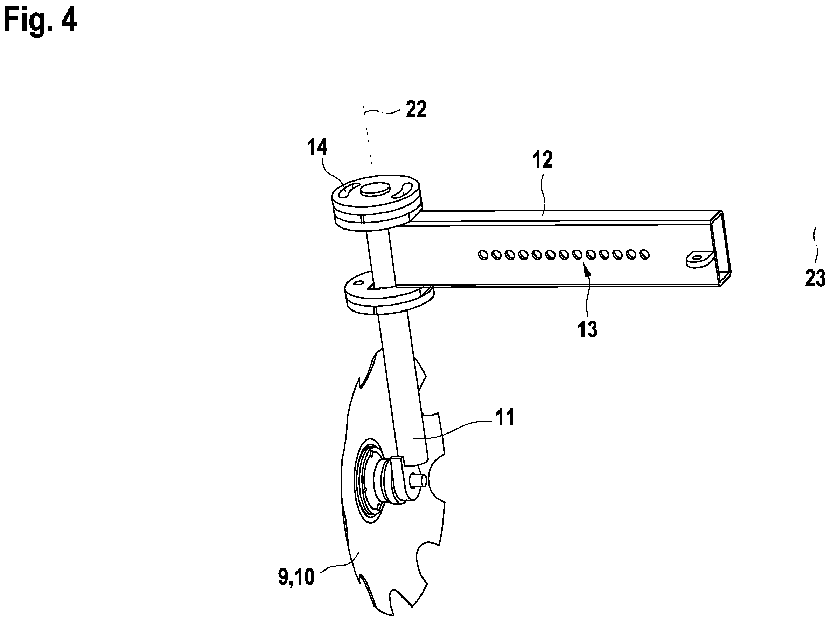

Fig. 4 zeigt eine einfache Ausbildung einer Scheiben-Linearverstellung 13 mit einer Langlochreihe. Im gezeigten Ausführungsbeispiel befindet sich die Langlochreihe der Scheiben-Linearverstellung 13 am Scheibenträger 12. Auch eine anderweitige Ausgestaltung, beispielsweise mit Langlöchern am Scheibenträger 12 oder mit Lochreihen oder Langlöchern am Werkzeugrahmen 5 ist hier möglich, um die Scheiben-Linearverstellung 13 und eine Fixierbarkeit an unterschiedlichen Positionen zu gewährleisten.

Eine Variante zur Scheiben-Linearverstellung 13 zeigt Fig. 5. Gemäß Fig. 5 sind zwischen Werkzeugrahmen 5 und Scheibenträger 12 Aktuatoren, beispielsweise Hydraulik- oder Pneumatikzylinder, angeordnet. Über diese Aktuatoren kann in Verbindung mit einer Steuerungseinheit oder Regelungseinheit die Linearverstellbarkeit erfolgen.

Ferner zeigen die Figuren, dass die einzelne Bearbeitungseinheit 3 eine Walze 16 umfasst. Die Walze 16 ist über einen Walzrahmen 15 mit dem Werkzeugrahmen 5 verbunden. Der Walzrahmen 15 ist um eine zur Querachse 23 parallele Drehachse gegenüber dem Werkzeugrahmen 5 drehbar. Diese Drehbarkeit des Walzrahmens 15 gegenüber dem Werkzeugrahmen 5 dient zur Tiefenführung der Schar 6 bzw. der Schneidscheiben 9, 10. Mittels einer Walz-Verstellung 17 kann die Verdrehung des Walzrahmens 15 gegenüber dem Werkzeugrahmen 5 eingestellt und an unterschiedlichen Positionen fixiert werden.

Die Walze 16 dient neben der Tiefenführung auch zur leichten Verdichtung des Bodens.

Neben der vorstehenden schriftlichen Beschreibung der Erfindung wird zu deren ergänzender Offenbarung hiermit explizit auf die zeichnerische Darstellung der Erfindung in den Fig. 1 bis 5 Bezug genommen.

### Bezugszeichenliste

- 1: Hackpflug
- 2: Rahmen
- 3: Bearbeitungseinheit
- 4: Grundrahmen
- 5: Werkzeugrahmen
- 6: Schar
- 7: Scharträger
- 8: Schar-Verstellung

- 9: Vorder-Schneidscheibe
- 10: Nach-Schneidscheibe
- 11: Scheibenaufnahme
- 12: Scheibenträger
- 13: Scheiben-Linearverstellung
- 14: Scheiben-Winkelverstellung

- 15: Walzrahmen
- 16: Walze
- 17: Walz-Verstellung

- 20: Fahrtrichtung
- 21: Gassenmittellinie
- 22: senkrechte Achse
- 23: Querachse

## Patentansprüche

1. Hackpflug (1) zur Unkrautvernichtung in Gassen zwischen Reihen aus Kulturpflanzen, umfassend
einen an einer Zugmaschine befestigbaren Rahmen (2) zum Ziehen entlang einer Fahrtrichtung (20),
und zumindest eine am Rahmen (2) angeordnete Bearbeitungseinheit (3) zur Bearbeitung einer einzelnen Gasse mit einer parallel zur Fahrtrichtung (20) definierten Gassenmittellinie (21), wobei die Bearbeitungseinheit (3) umfasst:
• zumindest eine Schar (6) im Bereich der Gassenmittellinie (21),
• zumindest eine Vorder-Schneidscheibe (9) vor der Schar (6) und seitlich versetzt zur Gassenmittellinie (21), und
• zumindest eine Nach-Schneidscheibe (10) nach der Schar (6) und seitlich versetzt zur Gassenmittellinie (21).

2. Hackpflug (1) nach Anspruch 1,
• wobei die Vorder-Schneidscheibe (9) drehbar an einer Scheibenaufnahme (11) gelagert ist und die Scheibenaufnahme (11) mittels einer Scheiben-Winkelverstellung (14) relativ zum Rahmen (2) um eine senkrechte Achse (22) schwenkbar ist und an unterschiedlichen Drehwinkelpositionen fixierbar ist;
• und/oder wobei die Nach-Schneidscheibe (10) drehbar an einer Scheibenaufnahme (11) gelagert ist und die Scheibenaufnahme (11) mittels einer Scheiben-Winkelverstellung (14) relativ zum Rahmen (2) um eine senkrechte Achse (22) schwenkbar ist und an unterschiedlichen Drehwinkelpositionen fixierbar ist.

3. Hackpflug (1) nach Anspruch 2, wobei die möglichen Drehwinkelpositionen der einzelnen Scheibenaufnahme (11) durch zumindest zwei Anschläge der Scheiben-Winkelverstellung (14) begrenzt sind.

4. Hackpflug (1) nach einem der vorhergehenden Ansprüche, wobei die Vorder-Schneidscheibe (9) und/oder die Nach-Schneidscheibe (10) horizontal und senkrecht zur Gassenmittellinie (21) mittels einer Scheiben-Linearverstellung (13) relativ zum Rahmen (2) linearverstellbar sind.

5. Hackpflug (1) nach Anspruch 3 und 4, wobei die jeweilige Scheibenaufnahme (11) um die senkrechte Achse (22) drehbar an einem Scheibenträger (12) befestigt ist und der jeweilige Scheibenträger (12) linearbeweglich am Rahmen (2) geführt ist, und wobei der jeweilige Scheibenträger (12) an unterschiedlichen Positionen fixierbar ist.

6. Hackpflug (1) nach Anspruch 4 oder 5, umfassend zumindest einen Aktuator, insbesondere einen druckmittelgetriebenen Aktuator, zum Linearverstellen der Vorder-Schneidscheibe (9) oder Nach-Schneidscheibe (10).

7. Hackpflug (1) nach einem der vorhergehenden Ansprüche,
• wobei die zumindest eine Vorder-Schneidscheibe (9) als Hohlscheibe ausgebildet ist und mit ihrer konkaven Seite der Gassenmittellinie (21) zugewandt ist,
• und/oder wobei die zumindest eine Nach-Schneidscheibe (10) als Hohlscheibe ausgebildet ist und mit ihrer konkaven Seite der Gassenmittellinie (21) zugewandt ist.

8. Hackpflug (1) nach einem der vorhergehenden Ansprüche, wobei die Schar (6), insbesondere ausgebildet als Gänsefußschar, zwei Schneidflächen umfasst.

9. Hackpflug (1) nach einem der vorhergehenden Ansprüche, wobei die einzelne Bearbeitungseinheit (3) auf beiden Seiten der Gassenmittellinie (21) zumindest eine Vorder-Schneidscheibe (9) aufweist und/oder auf beiden Seiten der Gassenmittellinie (21) zumindest eine Nach-Schneidscheibe (10) aufweist.

10. Hackpflug (1) nach einem der vorhergehenden Ansprüche, wobei die einzelne Bearbeitungseinheit (3) eine Walze (16) zur Tiefenführung umfasst.
